# EUROPEAN PATENT APPLICATION

(11) **EP 4 718 297 A1**
(43) Date of publication of application: **01.04.2026**
(21) Application number: 25202590.3
(22) Date of filing: 16.09.2025
(51) Int. Cl.: G06F 21/53, G06F 21/64, G06F 21/57, G06F 21/60

(54) **AN APPARATUS FOR GENERATING ATTESTATION EVIDENCE, AN APPARATUS FOR VERIFYING ATTESTATION EVIDENCE AND A METHOD**

(30) Priority: 25.09.2024 US 202418895507
(71) Applicant: INTEL Corporation, Santa Clara, CA 95054 (US)
(72) Inventor: SMITH, Ned M., Beaverton, 97006 (US); SCARLATA, Vincent R., Beaverton, 97006 (US); BEANEY Jr., James, Raleigh, 27612 (US)
(74) Representative: 2SPL Patentanwälte PartG mbB

(57) **Abstract**

It is provided an apparatus comprising interface circuitry, machine-readable instructions, and processing circuitry to execute the machine-readable instructions. The machine-readable instructions include instructions to obtain a first set of data formats. The first set of data formats comprises data formats that are available to an attestation environment of a confidential computing environment for generation of attestation evidence of a confidential computing environment. The machine-readable instructions further comprise instructions to obtain a second set of data formats. The second set of data formats comprises data formats of attestation evidence that are available to an attestation verifier. The machine-readable instructions further comprise instructions to determine an optimal data format for attestation evidence of a confidential computing environment based on the first set of data formats and the second set of data formats and to generate attestation evidence of the confidential computing environment in the determined optimal data format.

## Description

### Background

Attestation procedures may be used to ensure the integrity and trustworthiness of a Confidential Computing Environment (CCE) or an application executed within this CCE. This is particularly relevant when the applications involved are part of sensitive or high-security operations. These attestation procedures may involve generating attestation evidence that demonstrates the CCE is operating as intended and has not been compromised. This attestation evidence may then be verified by an attestation verifier and may be requested by third parties who need to establish trust in the CCE before permitting it to engage in critical operations or transactions. Third parties, such as government agencies, financial institutions, and other organizations, often require a high level of security assurance, especially in environments that handle high-security applications, critical infrastructure, safety-critical systems, and privacy-sensitive data. Therefore, ensuring compatibility between the different participants in the attestation process may be important for maintaining trust and enabling secure interactions.

### Brief description of the Figures

Some examples of apparatuses and/or methods will be described in the following by way of example only, and with reference to the accompanying figures, in which
Fig. 1 illustrates a block diagram of an example of an apparatus for generating attestation evidence;
Fig. 2 illustrates a block diagram of an example of an apparatus for verifying attestation evidence;
Fig. 3 illustrates a flowchart of an example of a method; and
Fig. 4 illustrates an example of a block diagram of a data format negotiation system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

Attestation verifiers and third parties (also referred to as relying parties) may support different proprietary and/or standard attestation evidence data formats in the attestation procedure. This may result in a CCEs/platforms inability to participate in an online interaction that requires attestation as a prerequisite. A quoting environment may be a part of a CCE (a flexible platform capability that is hardened using the CCE technology) which may support a variety of attestation evidence data formats. The quoting environment may support attestation verifier or third-party (both referred to as requester) requests to format attestation evidence from a list of desired data formats. The quoting environment may also return a list of supported data formats. The requester may select from the set of supported formats common to both and preferred by the requester. CCEs with a quoting environment may be more likely to participate in online transactions that require attestation as a pre-requisite, such as high-security applications (e.g., government, military, and financial), critical infrastructure, safety critical, and privacy preserving / privacy sensitive applications.

Previous approaches relied on the attestation verifier to support multiple data formats and do the necessary processing to convert the attestation evidence. In this case, there may be scaling challenges because the attestation verifier may become large, complex, and difficult to maintain. Often the attestation verifier functionality may move into the cloud. Distributed and real-time environments may not afford to rely on cloud attestation verifiers as the connectivity and latency constraints may not be satisfied.

In other previous approaches a baseboard management controller (BMC) may be implement an attestation verifier functionality that re-asserts attestation evidence (claims) about the rest of the CCE and signs the attestation evidence using a BMC wielded key. In this case the BMC key may invalidate the third-party policies that expect attestation evidence to be produced by the correct CCE, such as Intel^{®} TDX / SGX rather than the BMC vendor.

In the disclosed technology a CCE attestation environment (e.g., Intel^{®} Quoting Enclave of the SGX CCE, or Intel Quoting TD of the TDX CCE) may be modified to implement multiple attestation evidence formats (e.g., DICE Tcblnfo, TCG concise-evidence, IETF CWT, legacy SGX etc.). Attestation verifiers (e.g., Intel^{®} Trust Authority) may implement support for an attestation evidence format that differs from the format supported by the attestation environment. The disclosed technology proposes a negotiation protocol that may be used to find the supported overlapping data formats and to select one of the supported data formats. This protocol may be exposed through an interface that is implemented by the attestation verifier and the attestation environment of the CCE or proxied by a tenant environment of the CCE. In the disclosed technology an attestation environment of the CCE may re-format attestation evidence to satisfy the agreed upon data format. In some cases, the device layering architecture of the CCE may make it difficult to re-format all instances of signed attestation evidence items of the CCE because the keys used to sign the attestation evidence items may not wielded by the attestation environment. In this case the proposed technology may use any of the following options: 1. The attestation environment may request the local attesting environments of the CCE to re-format and sign the component specific attestation evidence item. 2. The attestation environment may wrap the component specific attestation evidence item in an enveloping attestation evidence data format that may be recognized be the attestation verifier and may be redirected to a subsidiary attestation verifier that advertises support for the data format.3. The attestation environment may re-sign the component specific attestation evidence item using a key that it wields. For example, the attestation environment may rely on policies to equate the differently wielded keys.

The proposed technology, invention may improve interoperability of remote attestation processing in cloud, edge, and enterprise environments while preserving third-party policies that expect critical trusted signing keys may be used by the attestation environment. Platforms with this technology may be deployed in a larger set of networks and clouds where installed verification and third-party interfaces may not support the data formats. This technique allows greater flexibility in attestation sub-systems to accommodate the available data formats implemented by consumers of attestation data.

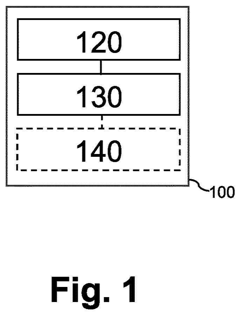

**Fig. 1** illustrates a block diagram of an example of an apparatus for generating attestation evidence 100 or device for generating attestation evidence 100. The apparatus for generating attestation evidence 100 comprises circuitry that is configured to provide the functionality of the apparatus 100. For example, the apparatus 100 of Fig. 1 comprises interface circuitry 120, processing circuitry 130 and (optional) storage circuitry 140. For example, the processing circuitry 130 may be coupled with the interface circuitry 120 and optionally with the storage circuitry 140.

For example, the processing circuitry 130 may be configured to provide the functionality of the apparatus 100, in conjunction with the interface circuitry 120. For example, the interface circuitry 120 is configured to exchange information, e.g., with other components inside or outside the apparatus 100 and the storage circuitry 140. Likewise, the device 100 may comprise means that is/are configured to provide the functionality of the device 100.

The components of the device 100 are defined as component means, which may correspond to, or implemented by, the respective structural components of the apparatus 100. For example, the device 100 of Fig. 1 comprises means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may comprise the machine-readable instructions, e.g., within the storage circuitry 140 or means for storing information 140.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may comprise circuitry configured to receive and/or transmit information.

For example, the processing circuitry 130 or means for processing 130may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may comprise a general-purpose processor, a Digital Signal Processor (DSP), a micro-controller, etc.

For example, the storage circuitry 140 or means for storing information 140 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The processing circuitry 130 is configured to obtain a first set of data formats. The first set of data formats comprises data formats that are available to an attestation environment of a CCE for generation of attestation evidence of the CCE. For example, the attestation environment may be a software that is executed by the processing circuitry 130. Attestation evidence of the CCE may be used for proving the integrity of at least a part of a CCE. Attestation evidence may be a comprehensive set of data used to verify the integrity and security of the CEE or at least of a part of the CCE at a specific point in time. The attestation evidence may be used in an attestation process to provide verifiable proof to the attestation verifier that at least a part of the CCE is secure, untampered with, and operating as expected, allowing the attestation verifier to establish trust in the CCE's integrity and security status. The CCE may comprise one or more parts (one or more layered environments). The attestation evidence of the CCE comprise one more attestation evidence items. Each attestation evidence item may be used for proving the integrity of the respective part of the CCE (environment of the CCE). In case that the attestation evidence of the CCE may comprise only one attestation evidence item, this attestation evidence item may be referred to as attestation evidence of the CCE. In some examples, the first set of data formats may be stored in the storage circuitry 140 any may be obtained by the processing circuitry 130 via the interface circuitry 120.

A CCE architecture may comprise a combination of specialized hardware and software components designed to protect data and computations from unauthorized access and tampering within a computer system. The CCE architecture may provide secure processing circuitry, which is responsible for executing sensitive workloads in an isolated environment. Additionally, the CCE architecture may provide secure memory, such as a protected region of the computer system's RAM, where sensitive data can be stored during computation. To further safeguard this data, the CCE architecture may provide memory encryption, ensuring that the contents of the system memory are protected even if physical access to the memory is obtained. For example, the CCE architecture may support I/O isolation and secure input/output operations, preventing data leakage during communication between the processing circuitry and peripheral devices. In some examples, the CCE architecture may provide secure storage capabilities of the computer system, such as a secure partition within the system's main storage, dedicated to storing cryptographic keys, sensitive configuration data. This secure storage ensures that critical data remains protected even when at rest. In some examples, the CCE may also comprise separate secure storage components, such as a tamper-resistant storage chip, like an integrity measurement register, to securely store measurements of the CCE and/or critical data associated with the CCE's operation. A host may generate one or more instances of CCEs based on the CCE architecture. The instances of the CCE architecture may be referred to as a CCE (also referred to as a Trusted Execution Environment). The CCE uses its components to enable the secure and isolated execution of workloads. A workload executed in the CCE may include a set of applications, tasks, or processes that are actively managed and protected by these secure hardware components. This includes computational activities that utilize the CCE's resources, including CPU, memory, and storage, to perform their operations. Such activities may involve running applications, processing sensitive data, performing calculations, and managing tasks that require a high level of security and confidentiality. The CCE ensures that these workloads are protected from unauthorized access and tampering by leveraging hardware-based security features and cryptographic measures, thereby maintaining the integrity and confidentiality of the data and processes throughout their execution.

The CCE may comprise one or more hierarchical layered environments (also referred to as local environments or as parts of the CCE). Each of the one or more layered environments may be specifically designed to perform distinct computing functions within the CCE. These layers may be hierarchically structured such that a lower layer may support and attest to the integrity of a layer above it, ensuring a continuous chain of trust throughout the CCE. For example, a lower layered environment of the CCE may receive a measurement from the environment layered above and sign it with its private key. In some examples, a measurement from a higher layer is signed by a lower layer to maintain a continuous chain of trust. This may be referred to as a trust dependency between the higher layer and the lower layer. For example, the measurement of a higher layer is signed with the private key of a lower layer, and the public key of the private-public key pair of the higher layer may also be signed with the private key of the lower layer. This ensures that the public key, when used to verify the measurement, is authenticated by the lower layer's signature. A private-public key pair, also known as asymmetric cryptography or public-key cryptography, is a cryptographic tool used for secure communication and authentication. The private key is kept secret and is used to sign data, creating a digital signature that verifies the data's integrity and origin. The corresponding public key is shared openly and is used to verify the digital signature created by the private key, ensuring that the data has not been tampered with and confirming the identity of the sender. This pair enables secure data exchange and authentication without needing to share the private key, thus maintaining security.

A measurement of a layered environment of the CCE may represent the state of a software or hardware component involved with that layered environment of the CCE at a specific point in time. For example, a measurement may be a digest that represents the state of a software or hardware component involved with an environment of the CCE at that specific point in time. A measurement of a software (including firmware) component may comprise a cryptographic hash of the software. This hash may include the binary executable code, configuration data, and/or initial state data of that software or software component. The hash is generated by reading the raw binary data of the system software components and processing it through a cryptographic hash function (e.g., SHA-256) to produce a fixed-size hash value that uniquely represents the exact state of the component at that point in time. For example, the measurement of the system software (also referred to as a claim) may comprise an image of the system software. The measurement of the system image may include a cryptographic hash of the binary executable code, configuration data, and initial state data of the system software or system software components, such as the BIOS/UEFI, bootloader, and operating system kernel. Further, a measurement may be signed. Signing a measurement may comprise generating a digital signature by encrypting a digest of the measurement, such as a hash, with a private key, thereby ensuring the authenticity and integrity of the measurement. For example, generating a digital signature may comprise creating a cryptographic hash of the measurement (the component's state) and then signing this hash with a private key to produce a digital signature, ensuring the integrity and authenticity of the measurement.

The one or more layered environments may be categorized into layers based on their functions within the CCE. The layers may be logically and/or hardware-separated based on their specific functions, roles, and responsibilities within the CCE, ensuring a structured and secure computing framework. For example, there may be one or more layers designed to perform foundational security functions, including the Root of Trust (RoT). The RoT may be a hardware-based security component that provides a secure and immutable trust anchor for the layers above. The foundational security provides the essential security mechanisms and trust anchors upon which the entire framework is built. The foundational security framework provides the base upon which the entire CCE's security relies. One example of a foundational security framework is the Device Identifier Composition Engine (DICE) specification. DICE is a hardware-based security mechanism that generates unique cryptographic identities and keys based on the initial measurement of a device's hardware and firmware state during boot. DICE comprises a process that derives cryptographic keys at each stage of the boot process. The keys derived based on DICE may be used to derive various cryptographic keys, including firmware keys and quoting keys, which create a chain of trust through layered identities and attestation. DICE may be defined in the specification "DICE Attestation Architecture" by the Trusted Computing Group, Version 1.1, Revision 0.18, January 6, 2024. Further, a trusted platform manager (also referred to as a Trusted Platform Module, or TPM) may be part of the CCE. The trusted platform manager may record measurements in an integrity register and manage cryptographic keys to sign measurements for internal verification. The trusted platform manager ensures that the system starts from a trusted state, forming the foundational security upon which the CCE operates.

Another layered environment of the CCE may be the quoting environment (QE) (also referred to as quoting agent) which may be configured to gathering, formatting, re-formatting and/or signing measurements and/or attestation evidence form the one or more layered environments of the CCE. For example, the QE may receive measurements for another environment of the CCE and format and/or signs it with a cryptographic key to obtain attestation evidence. In another example, the QE receives attestation evidence from an environment of the CCE and re-formats the attestation evidence. The QE may consolidate the security measurements and data from different environments of the CCE, ensuring they are structured in a format that can be verified by the attestation verifier. Further, the QE may sign measurements from higher layers and may itself be attested by the lower layers of the foundational framework. The QE may generate cryptographic proofs (quotes) to verify the integrity of one or more environments of the CCE. Further, the CCE may comprise such an execution environment (such as a tenant environment (TE)) and service environment (such as a migration environment (ME)). The TE executes the main computational tasks, while the ME handles the secure migration of workloads between different environments within the CCE. The TE may be a secure, isolated execution space dedicated to running a tenant's (user's) applications, data, and workload inside the CCE. It may be layered on top of the foundational hardware and firmware components of the CCE, which provide the basic secure enclave and isolated execution capabilities. This environment is designed to ensure that the tenant's assets are isolated from other tenants and protected from the underlying system, including the hypervisor and host operating system. The tenant environment may comprise one or more of the following components: A runtime environment, which includes the operating system or some OS layer that provides essential services for application execution; one or more libraries, which are precompiled code modules that offer common functionality needed by the tenant's applications; the tenant's application code, which performs specific tasks or computations; and the data processed by these applications. Further, bring-up code of the tenant environment may be used to initialize and load the one or more components of the tenant environment, taking the measurements of the tenant environment, and/or configuring the secure memory regions and execution contexts needed for their operation. In other words, the bring-up code of the tenant environment establishes and secures the tenant environment, ensuring that it is ready for safe and isolated execution within the CCE.

The attestation environment may be a part of the CCE and may be configured to collect measurements and generate attestation evidence. The attestation environment may comprise components from one or more environments within the CCE. For example, the attestation environment may include the quoting environment, as well as other components of the one or more layered environments referred to as local attestation environments (LAEs). These LAEs may be configure for generating specific attestation evidence of the one or more environments within the CCE. The attestation environment ensures that all relevant data from the CCE is accurately collected, processed, and conveyed as trustworthy evidence to external verifiers.

As described above, the CCE may comprise one or more layered environments. The attestation evidence of the CCE may be used for proving the integrity of at least a part of a CCE. In some examples, the generated attestation evidence may comprise one or more attestation evidence items corresponding to the one or more local environments of the CCE. In other words, the attestation evidence of the CCE may be a bundle of attestation evidence items of respective one or more environments of the CCE. The attestation evidence of the CCE may be used to for proving the integrity of each environment of the CCE (i.e., part of the CCE) for which the attestation evidence of the CCE comprises a corresponding attestation evidence item.

The attestation evidence of the CCE or the attestation evidence item of an environment of the CCE in case that the attestation evidence of the CCE comprises a plurality of attestation evidence may comprise a measurement of an environment of the CCE and a corresponding signature of the measurement. In some examples, the attestation evidence of the CCE or the attestation evidence item of an environment of the CCE in case that the attestation evidence of the CCE may comprise at least one of the following: measurement, the corresponding signature of the measurement, the corresponding public key, and the signature of the public key, configuration data, telemetry data, and inference data. Configuration data may comprise initial settings for the execution of the software image of the CCE environment being measured, such as default operational states like tick counters and file descriptor states. Telemetry data may include operational metrics available to the running image, such as memory usage, CPU cycles, and power cycles, providing insights into the system's performance. Inference data may comprise operations performed by the software image that relate to the integrity of the environment, such as extending the environment with runtime images. The inference data might include a manifest structure containing a Merkle Tree of digests of the extended images. The information included in the attestation evidence may be formatted into a specific data format as described in more detail below. Further, the attestation evidence may be signed with a cryptographic key as also described in more detail below.

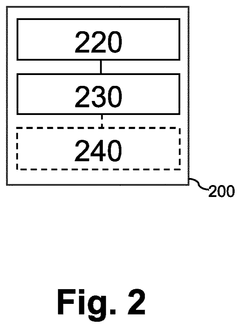

The processing circuitry 130 is further configured to obtain a second set of data formats. The second set of data formats comprises data formats of attestation evidence that are available to an attestation verifier. The second set of data formats may be obtained by the processing circuitry 130 from the attestation verifier, for example via the interface circuitry 120. In another example, the second set of data formats may be stored in the storage circuitry 140 and may be obtained by the processing circuitry 130 via the interface circuitry 120. For example, the attestation verifier may be implemented by the apparatus 200 as described below with regards to Fig 2.

The processing circuitry 130 is further configured to determine an optimal data format for attestation evidence proving the integrity of at least a part of a CCE based on the first set of data formats and the second set of data formats. The processing circuitry 130 is further configured to generate attestation evidence proving the integrity of at least a part of this CCE in the determined optimal data format. For example, the steps described above, which are executed by the processing circuitry 130 may carried out by a software running on the processing circuitry 130. For example, the software agent may be an attestation environment and/or a quoting environment.

In some examples, a data format of attestation evidence may refer to specifically structured representations of the information that needs to be communicated as part of the attestation process. Different data formats may vary in how they organize and encode this information, such as the arrangement of data fields, the level of detail provided, or the method of encoding used to ensure efficiency and security. These formats may further differ in terms of complexity, with some supporting straightforward, flat structures like simple key-value pairs, while others may involve more intricate configurations, such as nested structures, tagged data types, or the inclusion of cryptographic elements like digital signatures and certificates. The choice of data format may significantly impact both the efficiency and security of the attestation process. For instance, some formats are designed to be compact and efficient, making them suitable for environments with limited resources or where minimizing data size is crucial. Others might prioritize human readability and ease of use, making them more appropriate in contexts where the data needs to be easily understood or manually reviewed. Additionally, certain data formats may offer enhanced security features, such as being encapsulated within a secure data container or being associated with cryptographic credentials, which help ensure the integrity, authenticity, and confidentiality of the attestation evidence throughout its transmission and storage.

The attestation environment may be capable of generating attestation evidence in one or more of these data formats. That is one or more data formats may be available to the attestation environment. The first set of data formats comprises all the data formats in which the attestation environment is able to generate attestation evidence. The verifier may be capable of processing attestation evidence in one or more formats that are available to it. This means the verifier is capable of interpreting and validating attestation evidence in each of these formats. The second set of data formats comprises all the data formats in which the verifier is able to process attestation evidence. However, in resource-limited environments, both the attestation environment and the verifier may only support a limited number of available formats. This limitation may depend on factors such as the processing power, memory capacity, and storage available on the platform, as well as the complexity of the cryptographic operations required to generate, interpret, and validate the evidence.

The attestation verifier may be an entity or system responsible for evaluating the attestation evidence provided by an attestation environment to determine the trustworthiness and integrity of a platform or device. The verifier analyzes the attestation evidence by comparing it to a reference value. The attestation verifier may generate an attestation result based on this comparison. If the attestation evidence matches the reference value, the verifier confirms that the CCE is operating securely and has not been compromised and the generated attestation result may a positive attestation result. If the attestation evidence does not match the reference value, the verifier may flag the CCE as potentially untrustworthy, signaling that it may be compromised or not meeting the required security standards and the generated attestation result may a negative attestation result. The attestation result may be transmitted to and used by a third-party (also referred to as relying party), to make informed decisions about whether to allow the CCE and/or the application that it is running access to resources or services. The attestation result may serve as a critical component in establishing trust in secure environments, ensuring that only applications meeting specific security standards are granted access.

The optimal data format may be a data format that is mutually available to the attestation environment and to the verifier. If there is more than one data format that is mutually available to the attestation environment and to the verifier then the optimal data format may be the data format that is chosen for the attestation evidence generation among the plurality of mutually available to the attestation environment and to the verifier. For example, the data format may be chosen by a predetermined order of the attestation environment and/or the verifier.

In some examples, the processing circuitry 130 may be further configured to determine an overlap set between first set of data formats and the second set of data formats. The overlap set may comprise the data formats that are part of the first set of data formats and part of the second set of data formats. In other words, the overlap set may comprise data formats that are mutually available to the attestation environment and to the verifier. In other words, the overlap set may comprise the data formats that both the attestation environment and the attestation verifier are able to process. If the overlap set comprise one data format, then this data format may be determined as the optimal data format.

In some examples, the processing circuitry 130 may be further configured to determine the optimal data format among the determined overlap set according to a predetermined order. This predetermined order may be available as an ordered list of data formats from the attestation environment, from the verifier or a combination thereof. The ordered list may rank the data formats from most favored to least favored based on certain criteria. The processing circuitry 130 may then determine the data set as the optimal data format among all the data formats in the overlap set which is the highest on this ordered list. The ordered list may be predetermined by the attestation environment and/or the verifier and may be obtained by the processing circuitry via the interface circuitry 120 or stored in the storage circuitry 140. For example, the order list may be determined based on factors such as processing efficiency, security, or compatibility of the attestation environment, the verifier or of both.

In another example, the optimal data format may be determined at random among the data formats of the overlap set.

In some examples, the processing circuitry 130 may be further configured to transmit the determined overlap set to the attestation verifier. The processing circuitry 130 may be further configured to obtain the optimal data format from the attestation verifier chosen among the data formats of the overlap set. The verifier may determine the optimal data format among the data formats of the overlap set according to a predetermined order of the verifier as described above. In another example, the optimal data format may be determined at random by the attestation verifier among the data formats of the overlap set.

Then the processing circuitry 130 generates the attestation evidence of the CCE proving the integrity of at least a part of the CCE. The attestation evidence of the CCE is generated in the determined optimal data format. The attestation evidence of the CCE may be generated by the attestation environment, which is executed by the processing circuitry 130. In some examples, generating the attestation evidence of the CCE in the determined optimal data format comprises at least one of formatting or re-formatting the attestation evidence of the CEE in the determined optimal data format and signing the formatted attestation evidence of the CCE with a cryptographic key. In case that the attestation evidence of the CCE comprise a plurality of attestation evidence formats, then generating the attestation evidence of the CCE in the determined optimal data format comprises at least one of formatting or re-formatting each of the one or more attestation evidence items of the attestation evidence of the CEE in the respective optimal data format and signing the formatted attestation evidence item with a respective cryptographic key (see also below).

In some examples, the third-party may communicate specific security standards for attestation evidence, which it requires, to the attestation verifier. These security standards may be implemented in a Key Wielding Policy (KWP). The KWP may specify which cryptographic keys and signing standards the third-party trusts. Based on the KWP, the attestation verifier may determine the second set of data formats by only including those that comply with these standards. In this way, the third-party's policies, which require the use of critical trusted keys, are preserved, ensuring that security standards are consistently met.

In some examples, the processing circuitry 130 is further configured to transmit the generated attestation evidence to the attestation verifier. The attestation verifier may compare to the one or more attestation evidence items to one or more reference values as described above and may generate an attestation result comprising the result of these comparisons.

The disclosed technique may ensure a seamless and efficient communication between the attestation environment and the attestation verifier. By obtaining and comparing the available data formats from both the attestation environment and the verifier, the technique determines an optimal data format that is mutually compatible. This approach minimizes the risk of incompatibility issues, enhances the reliability of the attestation process, and ensures that the integrity of the confidential computing environment is accurately and effectively proven. Additionally, selecting the most suitable format improves processing efficiency, reduces overhead, and leads to a more streamlined and secure attestation workflow. Furthermore, the disclosed technique enhances the interoperability of remote attestation processes across various applications, including cloud, edge, and enterprise environments. It enables CCEs to be deployed across a wider range of networks and cloud environments, even in cases where existing attestation verifiers and relying party interfaces may not natively support the formats used by these CCEs. By providing greater flexibility in the attestation sub-systems, this technique adapts to the preferred formats of consumers of attestation data, thereby improving the applicability and effectiveness of remote attestation across diverse technological ecosystem

In some examples, the first set of data formats available to the attestation environment and/or the second set of data formats available to the verifier may comprise at least one of the following data formats: DICE TcbInfo, TCG Concise-Evidence, IETF CWT (CBOR Web Token), JSON arrays, CBOR arrays, or CBOR tagged data structures, JSON Web Tokens (JWT), CBOR Web Tokens (CWT), SPDM transcripts, X.509 certificates, and XML-Digital Signature documents or the like.

DICE Tcblnfo is a format used to convey detailed information about the Trusted Computing Base (TCB) in systems utilizing the Device Identifier Composition Engine (DICE) architecture. It provides specific details about the security and configuration state of various system components, allowing verifiers to understand the exact security posture of the platform. This format's advantage lies in its ability to offer granular reporting of the TCB, which is critical for systems requiring high security. The evidence in this format may include signatures to ensure the integrity and authenticity of the data, although this depends on the specific implementation. TCG Concise-Evidence, defined by the Trusted Computing Group (TCG), is a compact and standardized format for representing attestation evidence. It is designed to be interoperable across different platforms and systems, making it easier to validate and trust evidence in diverse environments. The primary advantage of this format is its standardization, which facilitates consistent interpretation of attestation data across various verifiers. While not inherently including signatures, the format can be combined with digital signatures to enhance the security and integrity of the attestation evidence. IETF CWT (CBOR Web Token) is a binary format that is similar to JSON Web Tokens (JWT) but encoded in Concise Binary Object Representation (CBOR). This format is designed for environments where data size and processing efficiency are critical, such as loT devices and other resource-constrained environments. The CBOR encoding allows for more compact and faster processing compared to JSON. CWTs can include digital signatures, which are essential for ensuring the authenticity and integrity of the token's claims, making this format both secure and efficient for constrained environments. JSON arrays and CBOR arrays or CBOR tagged data structures are used for organizing data in a structured way. JSON is widely known for its human-readability and ease of use, making it ideal for environments where the data needs to be easily readable or manually processed. CBOR, on the other hand, is a binary format that is more compact and faster to process, making it suitable for environments where efficiency and size are critical. JSON Web Tokens (JWT) and CBOR Web Tokens (CWT) are compact formats for securely transmitting information between two parties. JWTs, which are encoded in JSON, are widely used for web authentication due to their simplicity and the ease with which they can be integrated into existing systems. CWTs, encoded in CBOR, offer similar functionality but are more efficient for constrained environments. Both JWTs and CWTs can include digital signatures, which are crucial for verifying the authenticity and integrity of the transmitted data. SPDM transcripts are secure communication records used in Secure Platform Device Management (SPDM) to ensure the integrity and authenticity of messages exchanged between devices. The primary advantage of SPDM transcripts is their ability to maintain a secure and verifiable communication history, which is essential in environments where secure device management is critical. These transcripts often include cryptographic signatures to protect the integrity of the communication. X.509 certificates are digital certificates that follow the X.509 public key infrastructure standard, used to verify the identity of entities and secure communications. These certificates mandatorily include a digital signature that binds a public key to the identity of the certificate holder, ensuring that the holder is who they claim to be. The primary advantage of X.509 certificates is their widespread adoption and trustworthiness in securing communications across the internet. XML-Digital Signature documents are XML-based standards for digitally signing data, ensuring the integrity and origin of the information. These documents are advantageous in environments that rely on XML for data exchange, as they allow for secure and verifiable signatures within an XML structure. The digital signature included in these documents guarantees that the data has not been altered since it was signed and confirms the identity of the signer. The formats may be for example also described in the document "Remote ATtestation procedureS (RATS) Architecture", by Henk Birkholz and Dave Thaler and Michael Richardson and Ned Smith and Wei Pan, published by RFC Editor, in January 2023, doi: 10.17487/RFC9334.

In some examples, the CCE comprises one or more layered environments, also referred to as local environments. In some examples, one or more first sets of data formats each comprises data formats that are available to the attestation environment for generation of respective one or more attestation evidence items of the respective one or more local environments of the confidential computing environment. As described above, the attestation evidence of the CCE may comprise one or more attestation evidence items used for proving the integrity of one or more environments of the CCE. In some examples, the attestation environment may have different data formats available for the generation of different attestation evidence items for different environments of the CCE.

In some examples, the processing circuitry 130 is further configured to determine a respective optimal data format for the respective attestation evidence item of the one or more local environments of the CCE based on the respective first set of data formats and the second set of data formats. In other words, the processing circuitry 130 may determine an optimal data format for each attestation evidence item of respective the one or more environments of the CCE. The optimal data format may be determined as described above based on the respective first data set corresponding to respective environment of the CCE and the second data set. In some examples, the processing circuitry 130 may be further configured to generate one or more attestation evidence items, included in the attestation evidence, of the one or more local environments of the CCE in the respective determined optimal data format.

In some examples, the processing circuitry 130 is further configured to obtain one or more attestation evidence items of the one or more local environments of the CCE and format the one or more attestation evidence items in the respective determined optimal format. That is, the processing circuitry 130, for example, the quoting environment, may obtain the one or more unformatted attestation evidence items. That is for example, the processing circuitry 130 may obtain one or more measurements and corresponding signatures of one or more environments of the CCE and format it into the determined optimal data format. In some examples, the processing circuitry 130 is further configured to sign the one or more formatted attestation evidence items of the one or more local environments of the CCE with a respective cryptographic key. For example, the processing circuitry 130, for example the attestation environment, may receive signing keys from the one or more environments for signing the attestation evidence items formatted in the respective optimal data formats.

In some examples, the processing circuitry 130 is further configured to obtain one or more attestation evidence items of the one or more local environments of the CCE and re-format the one or more attestation evidence items of the attestation evidence of the CEE in the respective determined optimal data format. The processing circuitry 130 may be configured to sign the formatted attestation evidence item with a respective cryptographic key. In some examples, the processing circuitry 130, for example, the quoting environment, may receive one or more attestation evidence items from one or more environments of the CCE in a data format which is not the optimal data format and then re-formats these one or more attestation evidence items into the determined optimal format any may be sign each of them with a cryptographic key.

In another example, the generation of an attestation evidence item may comprise the processing circuitry 130 to select the attestation evidence item of the local environment of the CCE in the determined optimal data format from a plurality of generated attestation evidence items of the local environments in a plurality of data formats. That is the local environment of the CCE may have the attestation evidence item available in a plurality of data formats and the processing circuitry may select the attestation evidence item in the determined optimal format from among the plurality of attestation evidence items in different data formats.

In some examples, the processing circuitry 130, for example, the quoting environment, may be configured to control the one or more local environments to dynamically generate the one or more attestation evidence items in the respective determined optimal data formats.

In some examples, the first set of data formats comprises only these one or more data formats that are available for the generation of attestation evidence items of all environments of the CCE. In other words, the first set of data formats may be the intersection of the available data formats for the attestation evidence items of the one or more environments of the CCE. The processing circuitry 130 may determine one optimal data format that is used to generate the each of the one or more environments of the CCE. For example, the plurality of environments of the CCE may neg
In some examples, the processing circuitry 130 is further configured to obtain one or more attestation evidence items of the one or more local environments of the confidential computing environment. For example, the processing circuitry 130 may generate the one or more attestation evidence items of the one or more local environments of the confidential computing environment or may obtain it via the interface circuitry 120 from the storage circuitry 140. Further, the processing circuitry 130 may be configured to wrap the one or more attestation evidence items of the one or more local environments in the respective determined optimal data format. For example, the one or more attestation evidence items may be formatted in a data format that is not the respective optimal format. For example, the one or more attestation evidence items may be signed and the processing circuitry 130, for example the quoting environment, may not have access to the signing keys and may not be able to re-format the one or more attestation evidence items. In this case the processing circuitry 130 may wrap the one or more attestation evidence items into a data wrapper structure that has the corresponding respective optimal data format. The verifier may then be able to process the wrapped data structure and may forward the received one or more attestation evidence items to another entity which is able to process the un-wrapped one or more attestation evidence items.

In some examples, the wherein the one or more local environments of the CCE may comprise at least one of foundational environment (such as the Root of Trust (RoT)), a firmware environment, boot loader, a trusted platform manager environment (which may manage the security of multiple CCEs), a quoting environment (QE), a tenant environment (TE) and a migration environment ME. The one or more environments of the CCE may have
trust dependencies between each other. That is that each environment's security and integrity may be contingent on the proper functioning of a previous layers.

In some examples, the processing circuitry 130 is further configured to transmit the generated attestation evidence to the third-party. The third-party (also referred to relying party) may be an entity that depends on the attestation result generated by the attestation verifier to make trust decisions about whether to allow the CCE and/or the application that it is running access to resources or services. The third-party may receive the attestation result from the attestation verifier and/or the generated attestation evidence from the attestation verifier or the processing circuitry 130 (for example from the attestation environment). For example, the relying party may be a service provider, a security application, or any entity that needs to ensure the CCE's integrity before allowing access to its resources. In some examples, the second set of data formats may further comprise data formats of attestation evidence which are processable by a third-party. For example, the third-party may verify additional to the attestation result or instead of the attestation result the attestation evidence generated by the processing circuitry 130 directly. In this case the optimal data format should also be processable by the third-party. The second data set of data formats may therefore only comprise data formats that may be processable by the attestation verifier and the third-party. The optimal data format may be determined as described above by determining an overlap between the first and the second set. The processing circuitry 130 may be further configured to determine the optimal data format among the determined overlap set according to a predetermined order. This predetermined order may be available as an ordered list of data formats from the attestation environment, from the verifier, from the third-party or any combination thereof.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 4).

**Fig. 2** illustrates a block diagram of an example of an apparatus for verifying attestation evidence 200 or device for verifying attestation evidence 200. The apparatus for verifying attestation evidence 200 comprises circuitry that is configured to provide the functionality of the apparatus 200. For example, the apparatus 200 of Fig. 2 comprises interface circuitry 220, processing circuitry 230 and (optional) storage circuitry 240. For example, the processing circuitry 230 may be coupled with the interface circuitry 220 and optionally with the storage circuitry 240.

For example, the processing circuitry 230 may be configured to provide the functionality of the apparatus 200, in conjunction with the interface circuitry 220. For example, the interface circuitry 220 is configured to exchange information, e.g., with other components inside or outside the apparatus 200 and the storage circuitry 240. Likewise, the device 200 may comprise means that is/are configured to provide the functionality of the device 200.

The components of the device 200 are defined as component means, which may correspond to, or implemented by, the respective structural components of the apparatus 200. For example, the device 200 of Fig. 2 comprises means for processing 230, which may correspond to or be implemented by the processing circuitry 230, means for communicating 220, which may correspond to or be implemented by the interface circuitry 220, and (optional) means for storing information 240, which may correspond to or be implemented by the storage circuitry 240. In the following, the functionality of the device 200 is illustrated with respect to the apparatus 200. Features described in connection with the apparatus 200 may thus likewise be applied to the corresponding device 200.

In general, the functionality of the processing circuitry 230 or means for processing 230 may be implemented by the processing circuitry 230 or means for processing 230 executing machine-readable instructions. Accordingly, any feature ascribed to the processing circuitry 230 or means for processing 230 may be defined by one or more instructions of a plurality of machine-readable instructions. The apparatus 200 or device 200 may comprise the machine-readable instructions, e.g., within the storage circuitry 240 or means for storing information 240.

The interface circuitry 220 or means for communicating 220 may correspond to one or more inputs and/or outputs for receiving and/or transmitting information, which may be in digital (bit) values according to a specified code, within a module, between modules or between modules of different entities. For example, the interface circuitry 220 or means for communicating 220 may comprise circuitry configured to receive and/or transmit information.

For example, the processing circuitry 230 or means for processing 230may be implemented using one or more processing units, one or more processing devices, any means for processing, such as a processor, a computer or a programmable hardware component being operable with accordingly adapted software. In other words, the described function of the processing circuitry 230 or means for processing 230 may as well be implemented in software, which is then executed on one or more programmable hardware components. Such hardware components may comprise a general-purpose processor, a Digital Signal Processor (DSP), a micro-controller, etc.

For example, the storage circuitry 240 or means for storing information 240 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The processing circuitry 230 is configured to obtain a first set of data formats. The first set of data formats comprises data formats of attestation evidence which are verifiable by an attestation verifier. The processing circuitry 230 is configured to obtain an overlap set between the first set of data formats and a second set of data formats. The second set of data formats comprises data formats of attestation evidence that are available for generation of attestation evidence by the attestation environment. The processing circuitry 230 is further configured determine an optimal data format evidence of a confidential computing environment based on the overlap set. For example, the attestation verifier may be a software that is executed by the processing circuitry 230. In another example, the apparatus 200 and/or the processing circuitry 230 may implement the attestation verifier.

The processing circuitry 230 may communicate with the attestation environment via the interface circuitry 230. For example, the attestation environment may be implemented by the apparatus 100 as described above with regards to Fig. 1.

In some examples, the processing circuitry 230 may be configured to transmit the first set of data formats to the attestation environment.

In some examples, the processing circuitry 230 may be configured to generate an attestation result based on the verified received attestation evidence. In some examples, the processing circuitry 230 may be configured to transmit the generated attestation evidence to a party. The attestation result generated by the attestation verifier may be formatted in a specific data format that encapsulates the conclusions drawn from evaluating the attestation evidence. The attestation result may comprise information such as the verification status, cryptographic proof of the evaluation, and other relevant metadata that confirms the integrity and security of the CCE or its host.

In some examples, the determined data format is negotiated between the attestation verifier and the third-party. The attestation verifier and the third-party may negotiate an optimal data format for the attestation result similar the negotiation between the attestation environment and the attestation verifier about the optimal data format for the attestation evidence as described above with regards to Fig. 1. This ensures that the attestation result is both compatible with and easily processable by the third-party as well as by the attestation verifier, enabling a seamless and secure trust decision process. In some examples, the processing circuitry 230 may be configured to re-format the attestation result in the determined optimal data format.

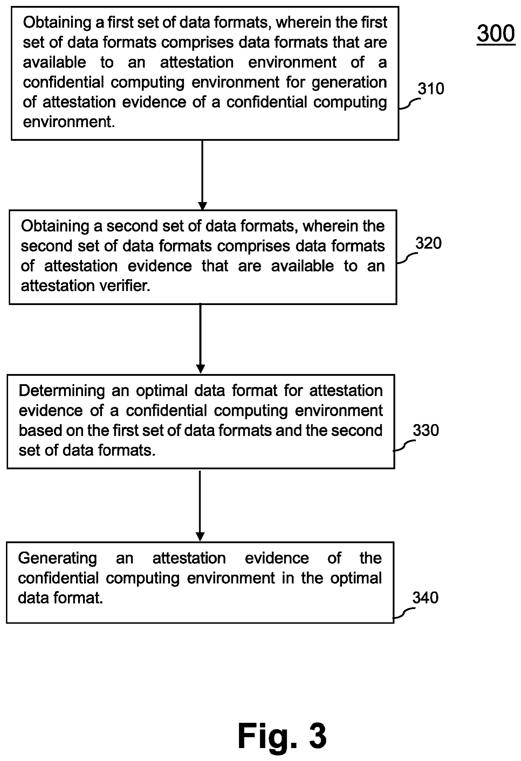

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 4).

**Fig. 3** illustrates a flowchart of an example of a method 300. The method 300 may, for instance, be performed by an apparatus as described herein, such as apparatus 100 and/or apparatus 200. The method 300 comprises 310 obtaining a first set of data formats. The first set of data formats comprises data formats that are available to an attestation environment of a confidential computing environment for generation of attestation evidence of a confidential computing environment. The method 300 further comprises 310 obtaining a second set of data formats. The second set of data formats comprises data formats of attestation evidence that are available to an attestation verifier. The method 300 further comprises 330 determining an optimal data format for attestation evidence of a confidential computing environment based on the first set of data formats and the second set of data formats. The method 300 further comprises 340 generating attestation evidence of the confidential computing environment in the optimal data format.

In some examples, the method 300 further comprises determining an overlap between first set of data formats and the second set of data formats. In some examples, the method 300 further comprises determining the optimal data format for attestation evidence of the confidential computing environment based on the overlap.

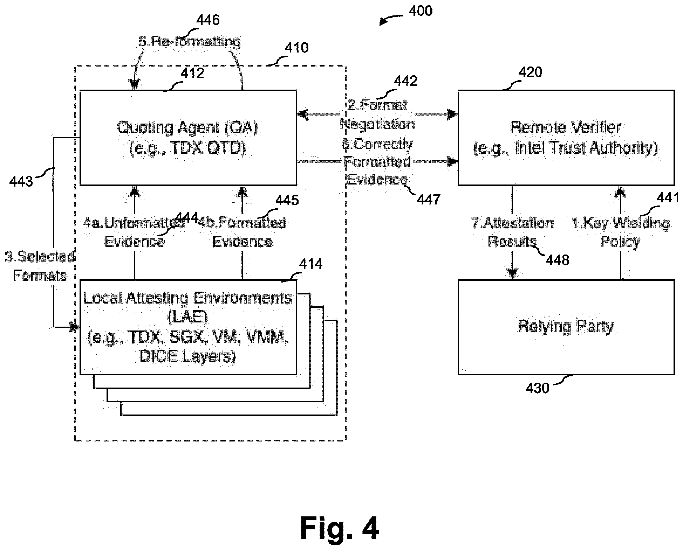

More details and aspects of the method 300 are explained in connection with the proposed technique or one or more examples described above (e.g., with reference to Fig. 1 and/or Fig. 2), or below. The method 200 may comprise one or more additional optional features corresponding to one or more aspects of the proposed technique, or one or more examples described above (e.g., Figs. 1 - 2) or below (e.g., Fig. 4).

### Further examples

**Fig. 4** illustrates an example of a block diagram of a data format negotiation system 400. The system 400 comprises an attestation environment 410. The attestation environment may comprise a quoting environment 412 (also referred to as quoting agent) and a plurality of local attestation environments 414. The attestation environment and its components may be part of a CCE. The local attestation environments 414 may comprise, in case of a TDX trusted domain (TD) CCE, the quoting environment may be quoting TD environment, and the local attestation environments 414 may comprise a TDX Module environment, a TDM loader, and one or more DICE layers including a DICE Root-of-Trust (RoT). Each of these local attestation environments 414 may produce attestation evidence that may have differing data formats. The system 400 further comprises an attestation verifier 420 (also referred to as remote verifier) and a third-party 430 (also referred to as relying party). The quoting environment 414, the attestation verifier 420 and the third-party 430 carry out the data format negotiation protocol as described below to ensure that the attestation evidence and/or the attestation results are formatted according to the formats supported by involved entities. The protocol as described below comprises a conceptual message data format negotiation.

In some examples, the various layers of local attestation environments 414 may support one or more attestation evidence data formats. The attestation environment 410 (for example, the local attestation environments 414 and the quoting environment 412) may implement an intra-attestation-environment-format-negotiation-protocol which allows internal components of the attestation environment 410 to respond to data format preferences for example of the local attestation environments 414. In some examples, more constrained local attestation environments may not have the ability to support multiple data format alternatives.

In some examples, the various local attestation environments 414 of the attestation environment 410 may wield signing keys. When a signing key is used to protect an attestation evidence item of a local attestation environment 414, the attestation evidence data format is also implicitly decided as any change to the formatting of the attestation evidence item of the signed evidence will invalidate the signature of the attestation evidence item. The local attestation environments 414 may apply a variety of strategies to accept a negotiated optimal attestation evidence data format. This may depend on the availability and/ flexibility of the specific local attestation environment 414. There may be the following strategies:
Available-Flexible: The local attestation environments 414 may dynamically format attestation evidence to a negotiated optimal data format and dynamically sign attestation evidence in response to the negotiated data format (also referred to as optimal data format).
Available-Not-Flexible: The local attestation environments 414 cannot dynamically format attestation evidence but may select from a fixed number of available data formats. For example, attestation evidence may be always formatted in one or more predetermined data formats. The local attestation environments 414 may dynamically sign the selected data format.
Not-Available-Flexible: The local attestation environments 414 is not available at the time a data format negotiation protocol is completed. But multiple data formats are supported. All supported data formats are signed at the time the signing key is available. The protocol selects from multiple previously signed data formats.
Not-Available-Not-Flexible: The local attestation environments 414 isn't available to apply a signature and the data format used is also fixed at manufacturing time. Resource limitations restrict the number of data formats that are used. In highly constrained local attestation environments 414 only one format may be possible.

In one example, an optimal data format for the attestation evidence is negotiated between the quoting environment 412 and the attestation verifier 420 and the optimal data format for the attestation result is negotiated between the attestation verifier 420 and the third-party 430. In another example, the relying party 430 may expect to consume attestation evidence directly from the quoting environment 412 and therefore, the optimal data format for the attestation evidence is negotiated between the quoting environment 412, the attestation verifier 420 and the third-party 430.

An example of the steps of data format negotiation protocol is described as follows: In step 441 the attestation verifier 420 may collect a key wielding policy (KWP) from one or more third-party nodes 430. The KWP may comprise attestation evidence data formats that are forwarded to the third-party 430 (and may be untouched by the attestation verifier 420). The KWP may also identify trust anchors that the third-party 430 may support for validating signed attestation evidence. In step 442 the data format negotiation protocol between the attestation verifier 420 and the attestation environment 410, for example the quoting environment 412) may be used to determine an overlap set. The overlap set may comprise supported (e.g. overlapping) data formats between the attestation verifier 420 and the attestation environment 410. In this regard the attestation verifier 420 lists the attestation evidence data formats it supports. This list may be based on the KWP trust anchor formatting constraints of the third-party 430. The quoting environment 412 may compute the overlap set of data formats, comprising data formats that are common to the attestation verifier 420 as well as to the various local attestation environments 414 in the attestation environment 410 that can produce attestation evidence. The flexibility and availability of each local attestation environments 414 as described above may be taken into consideration when computing the supported overlap set. If a local attestation environment 414 doesn't support a data format that is supported by the attention verifier 420, attestation evidence formatted in this excluded data format may still be returned to the attestation verifier 420. The attestation verifier 420 may then abort the attestation workflow or it may alternatively discover a peer attestation verifier service which supports this excluded data format and thus changing the set of attestation verifier supported data formats. In the second case the protocol continues (and may succeed).

In step 443 the quoting environment 412 may select from the overlap set an optimal data format. The optimal data format(s) may be set may, for example as described above with regards to Fig. 1. The optimal data format may be optimal for the local attestation environments 414 and which can also be processed by attestation verifier 420 and the third-party entities 430. The selected optimal data format(s) is/are supplied to the various local attestation environments 414 that contributed attestation evidence generation.

In step 444 the local attestation environments 414 which can't satisfy the optimal data format selection (and which may have a KWP that allows the quoting environment to wield a key on behalf of them) provide unsigned attestation evidence items to the quoting environment where it is formatted according to the optimal data format and may be signed. In step 445 the local attestation environments 414 that can satisfy the optimal data format selection provide the correctly formatted attestation evidence items, which may be signed, to using the local attestation environments 414 keys to the quoting environment 412.

In step 446 the attestation environment 410 accordingly re-formats attestation evidence that it received in step 444 to satisfy the agreed upon optimal data format. Additionally, the attestation environment 410 may counter-sign attestation evidence items that it received in step 445 to endorse the decision of the local attestation environments 414 to select a data format.

In step 447 the bundle of correctly optimally formatted attestation evidence is conveyed to the attestation verifier 420 for appraisal. In step 448 an attestation results of appraisal are formatted according to the format policy supplied by the third-party 430. The attestation verifier 420 may sign the attestation results and convey it to the third-party 430. This may comprise signed attestation evidence from an attestation environment 410 that is unmodified by the attestation verifier. The third-party 430 may verify this attestation evidence directly.

Further details and aspects are mentioned in connection with the examples described above. The example shown in Fig. 4 may include one or more optional additional features corresponding to one or more aspects mentioned in connection with the proposed concept or one or more examples described above (e.g., Figs. 1 to 3).

In the following, some examples of the proposed concept are presented:
An example (e.g., example 1) relates to an apparatus for generating attestation evidence comprising interface circuitry, machine-readable instructions and processing circuitry to execute the machine-readable instructions to obtain a first set of data formats, wherein the first set of data formats comprises data formats that are available to an attestation environment of a confidential computing environment for generation of attestation evidence of a confidential computing environment, obtain a second set of data formats, wherein the second set of data formats comprises data formats of attestation evidence that are available to an attestation verifier, determine an optimal data format for attestation evidence of a confidential computing environment based on the first set of data formats and the second set of data formats, generate attestation evidence of the confidential computing environment in the determined optimal data format.

Another example (e.g., example 2) relates to a previous example (e.g., example 1) or to any other example, further comprising that generating the attestation evidence in the optimal data format comprises at least one of formatting the attestation evidence in the optimal data format and signing the formatted attestation evidence with a cryptographic key.

Another example (e.g., example 3) relates to the processing circuitry is further to execute the machine-readable instructions to determine an overlap set between first set of data formats and the second set of data formats.

Another example (e.g., example 4) relates to the processing circuitry is further to execute the machine-readable instructions to determine the optimal data format among the determined overlap set according to a predetermined order.

Another example (e.g., example 5) relates to the processing circuitry is further to execute the machine-readable instructions to transmit the determined overlap set to the attestation verifier, and obtain the optimal data format from the attestation verifier chosen among the data formats of the overlap set.

Another example (e.g., example 6) relates to a previous example (e.g., one of the examples 1 to 5) or to any other example, further comprising that the generated attestation evidence comprises one or more attestation evidence items corresponding to the one or more local environments of the confidential computing environment.

Another example (e.g., example 7) relates to a previous example (e.g., one of the examples 1 to 5) or to any other example, further comprising that the confidential computing environment comprises one or more local environments.

Another example (e.g., example 8) relates to a previous example (e.g., example 7) or to any other example, further comprising that one or more first sets of data formats each comprises data formats that are available to the attestation environment for generation of respective one or more attestation evidence items of the attestation evidence of the respective one or more local environments of the confidential computing environment.

Another example (e.g., example 9) relates to a previous example (e.g., one of the examples 7 to 8) or to any other example, further comprising that the processing circuitry is further to execute the machine-readable instructions to determine a respective optimal data format for the respective attestation evidence item of the one or more local environments of the confidential computing environment based on the respective first set of data formats and the second set of data formats.

Another example (e.g., example 10) relates to a previous example (e.g., example 9) or to any other example, further comprising that the processing circuitry is further to execute the machine-readable instructions to generate one or more attestation evidence items of the attestation evidence of one or more local environments of the confidential computing environment in the respective determined optimal data format.

Another example (e.g., example 11) relates to a previous example (e.g., example 9) or to any other example, further comprising that the processing circuitry is further to execute the machine-readable instructions to select an attestation evidence item of a local environment of the confidential computing environment in the respective determined optimal data format from a plurality of generated attestation evidence items of local environment in a plurality of data formats.

Another example (e.g., example 12) relates to a previous example (e.g., example 9) or to any other example, further comprising that the processing circuitry is further to execute the machine-readable instructions to obtain one or more attestation evidence items of the one or more local environments of the confidential computing environment and wrap one or more attestation evidence items of the one or more local environments in the respective determined optimal data format.

Another example (e.g., example 13) relates to a previous example (e.g., one of the examples 7 to 12) or to any other example, further comprising that the processing circuitry is further to execute the machine-readable instructions to obtain one or more attestation evidence items of the one or more local environments of the confidential computing environment, and re-format the one or more attestation evidence items of the one or more local environments in the respective determined optimal format.

Another example (e.g., example 14) relates to a previous example (e.g., one of the examples 1 to 13) or to any other example, further comprising that the processing circuitry is further to execute the machine-readable instructions to sign the one or more formatted attestation evidence items of the one or more local environments of the confidential computing environment with a respective cryptographic key.

Another example (e.g., example 15) relates to a previous example (e.g., one of the examples 1 to 14) or to any other example, further comprising that the one or more local environments of the confidential computing environment comprise at least one of a foundational environment, a firmware environment, a boot loader, a tenant environment and service environment.

Another example (e.g., example 16) relates to a previous example (e.g., one of the examples 1 to 15) or to any other example, further comprising that the second set of data formats further comprises data formats of attestation evidence which are processable by a third-party.

Another example (e.g., example 17) relates to a previous example (e.g., one of the examples 1 to 16) or to any other example, further comprising that the processing circuitry is further to execute the machine-readable instructions to transmit the generated attestation evidence to the attestation verifier.

Another example (e.g., example 18) relates to a previous example (e.g., one of the examples 1 to 17) or to any other example, further comprising that the processing circuitry is further to execute the machine-readable instructions to transmit the generated attestation evidence to the third-party.

An example (e.g., example 19) relates to an apparatus for verifying attestation evidence comprising interface circuitry, machine-readable instructions and processing circuitry to execute the machine-readable instructions to obtain a first set of data formats, wherein the first set of data formats comprises data formats of attestation evidence which are verifiable by an attestation verifier, obtain an overlap set between the first set of data formats and a second set of data formats, the second set of data formats comprises data formats of attestation evidence that are available for generation of attestation evidence by the attestation environment, determine an optimal data format evidence of a confidential computing environment based on the overlap set.

Another example (e.g., example 20) relates to a previous example (e.g., example 19) or to any other example, further comprising that the processing circuitry is further to execute the machine-readable instructions to verify the received attestation evidence.

An example (e.g., example 21) relates to the apparatus according to any one of examples 19 to 20, wherein the processing circuitry is further to execute the machine-readable instructions to transmit the first set of data formats to the attestation environment.

Another example (e.g., example 22) relates to a previous example (e.g., one of the examples 19 to 21) or to any other example, further comprising that the processing circuitry is further to execute the machine-readable instructions to generate an attestation result based on the verified received attestation evidence.

Another example (e.g., example 23) relates to a previous example (e.g., one of the examples 19 to 22) or to any other example, further comprising that the processing circuitry is further to execute the machine-readable instructions to re-format the attestation result in a determined data format.

Another example (e.g., example 24) relates to a previous example (e.g., example 23) or to any other example, further comprising that the determined data format is negotiated between the attestation verifier and a third-party.

Another example (e.g., example 25) relates to a previous example (e.g., example 24) or to any other example, further comprising that the third-party is using an attestation result generated by the attestation verifier
Another example (e.g., example 26) relates to a previous example (e.g., one of the examples 19 to 25) or to any other example, further comprising that the processing circuitry is further to execute the machine-readable instructions to transmit the generated attestation evidence to a party, the third-party using an attestation result generated by the attestation verifier.

An example (e.g., example 27) relates to a method comprising obtaining a first set of data formats, wherein the first set of data formats comprises data formats that are available to an attestation environment of a confidential computing environment for generation of attestation evidence of a confidential computing environment, obtaining a second set of data formats, wherein the second set of data formats comprises data formats of attestation evidence that are available to an attestation verifier, determining an optimal data format for attestation evidence of a confidential computing environment based on the first set of data formats and the second set of data formats, generating an attestation evidence of the confidential computing environment in the optimal data format.

Another example (e.g., example 28) relates to a previous example (e.g., example 27) or to any other example, further comprising determining an overlap between first set of data formats and the second set of data formats and determining the optimal data format for attestation evidence of the confidential computing environment based on the overlap.

Another example (e.g., example 29) relates to a previous example (e.g., one of the examples 27 to 28) or to any other example, further comprising that generating the attestation evidence in the optimal data format comprises at least one of formatting the attestation evidence in the optimal data format and signing the formatted attestation evidence with a cryptographic key.

Another example (e.g., example 30) relates to a previous example (e.g., one of the examples 28 to 29) or to any other example, further comprising determining the optimal data format among the determined overlap set according to a predetermined order.

Another example (e.g., example 31) relates to a previous example (e.g., one of the examples 27 to 30) or to any other example, further comprising transmitting the determined overlap set to the attestation verifier and obtaining the optimal data format from the attestation verifier chosen among the data formats of the overlap set.

Another example (e.g., example 32) relates to a previous example (e.g., one of the examples 27 to 31) or to any other example, further comprising that the generated attestation evidence comprises one or more attestation evidence items corresponding to the one or more local environments of the confidential computing environment.

Another example (e.g., example 33) relates to a previous example (e.g., one of the examples 27 to 32) or to any other example, further comprising that the confidential computing environment comprises one or more local environments.

Another example (e.g., example 34) relates to a previous example (e.g., example 34) or to any other example, further comprising that one or more first sets of data formats each comprises data formats that are available to the attestation environment for generation of respective one or more attestation evidence items of the attestation evidence of the respective one or more local environments of the confidential computing environment.

Another example (e.g., example 35) relates to a previous example (e.g., one of the examples 33 to 34) or to any other example, further comprising etermining a respective optimal data format for the respective attestation evidence item of the one or more local environments of the confidential computing environment based on the respective first set of data formats and the second set of data formats.

Another example (e.g., example 36) relates to a previous example (e.g., example 35) or to any other example, further comprising generating one or more attestation evidence items of the attestation evidence of one or more local environments of the confidential computing environment in the respective determined optimal data format.

Another example (e.g., example 37) relates to a previous example (e.g., example 35) or to any other example, further comprising selecting an attestation evidence item of a local environment of the confidential computing environment in the respective determined optimal data format from a plurality of generated attestation evidence items of local environment in a plurality of data formats.

Another example (e.g., example 38) relates to a previous example (e.g., example 35) or to any other example, further comprising obtaining one or more attestation evidence items of the one or more local environments of the confidential computing environment and wrapping one or more attestation evidence items of the one or more local environments in the respective determined optimal data format.

Another example (e.g., example 39) relates to a previous example (e.g., one of the examples 33 to 38) or to any other example, further comprising obtaining one or more attestation evidence items of the one or more local environments of the confidential computing environment, and re-formatting the one or more attestation evidence items of the one or more local environments in the respective determined optimal format.

Another example (e.g., example 40) relates to a previous example (e.g., one of the examples 27 to 39) or to any other example, further comprising signing the one or more formatted attestation evidence items of the one or more local environments of the confidential computing environment with a respective cryptographic key.

Another example (e.g., example 41) relates to a previous example (e.g., one of the examples 27 to 41) or to any other example, further comprising that the one or more local environments of the confidential computing environment comprise at least one of a foundational environment, a firmware environment, a boot loader, a tenant environment and service environment.

Another example (e.g., example 42) relates to a previous example (e.g., one of the examples 27 to 41) or to any other example, further comprising that the second set of data formats further comprises data formats of attestation evidence which are processable by a third-party.

Another example (e.g., example 43) relates to a previous example (e.g., one of the examples 27 to 42) or to any other example, further comprising transmitting the generated attestation evidence to the attestation verifier.

Another example (e.g., example 44) relates to a previous example (e.g., one of the examples 27 to 43) or to any other example, further comprising transmitting the generated attestation evidence to the third-party

An example (e.g., example 45) relates to an apparatus comprising processor circuitry configured to obtain a first set of data formats, wherein the first set of data formats comprises data formats that are available to an attestation environment of a confidential computing environment for generation of attestation evidence of a confidential computing environment, obtain a second set of data formats, wherein the second set of data formats comprises data formats of attestation evidence that are available to an attestation verifier, determine an optimal data format for attestation evidence of a confidential computing environment based on the first set of data formats and the second set of data formats, generate attestation evidence of the confidential computing environment in the determined optimal data format.

An example (e.g., example 46) relates to an apparatus comprising processor circuitry configured to obtain a first set of data formats, wherein the first set of data formats comprises data formats of attestation evidence which are verifiable by an attestation verifier, obtain an overlap set between the first set of data formats and a second set of data formats, the second set of data formats comprises data formats of attestation evidence that are available for generation of attestation evidence by the attestation environment, determine an optimal data format evidence of a confidential computing environment based on the overlap set.

An example (e.g., example 47) relates to a device comprising means for processing for obtaining a first set of data formats, wherein the first set of data formats comprises data formats that are available to an attestation environment of a confidential computing environment for generation of attestation evidence of a confidential computing environment, obtaining a second set of data formats, wherein the second set of data formats comprises data formats of attestation evidence that are available to an attestation verifier, determining an optimal data format for attestation evidence of a confidential computing environment based on the first set of data formats and the second set of data formats, generating attestation evidence of the confidential computing environment in the determined optimal data format.

An example (e.g., example 48) relates to a device comprising means for processing for obtaining a first set of data formats, wherein the first set of data formats comprises data formats of attestation evidence which are verifiable by an attestation verifier, obtaining an overlap set between the first set of data formats and a second set of data formats, the second set of data formats comprises data formats of attestation evidence that are available for generation of attestation evidence by the attestation environment, determining an optimal data format evidence of a confidential computing environment based on the overlap set.

Another example (e.g., example 49) relates to a non-transitory machine-readable storage medium including program code, when executed, to cause a machine to perform the method of any of examples 27 to 44.

Another example (e.g., example 50) relates to a computer program having a program code for performing the method of any of examples 27 to 44 when the computer program is executed on a computer, a processor, or a programmable hardware component.

Another example (e.g., example 51) relates machine-readable storage including machine readable instructions, when executed, to implement a method or realize an apparatus as claimed in any pending examples.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus for generating attestation evidence comprising processing circuitry configured to:
obtain a first set of data formats, wherein the first set of data formats comprises data formats that are available to an attestation environment of a confidential computing environment for generation of attestation evidence of a confidential computing environment;
obtain a second set of data formats, wherein the second set of data formats comprises data formats of attestation evidence that are available to an attestation verifier;
determine an optimal data format for attestation evidence of a confidential computing environment based on the first set of data formats and the second set of data formats;
generate attestation evidence of the confidential computing environment in the determined optimal data format.

2. The apparatus according to claim 1, wherein generating the attestation evidence in the optimal data format comprises at least one of formatting the attestation evidence in the optimal data format and signing the formatted attestation evidence with a cryptographic key.

3. The apparatus according to claim 2, wherein the processing circuitry is further configured to determine an overlap set between first set of data formats and the second set of data formats.

4. The apparatus according to claim 3, wherein the processing circuitry is further configured to determine the optimal data format among the determined overlap set according to a predetermined order.

5. The apparatus according to any one of claims 3 to 4, wherein the processing circuitry is further configured to transmit the determined overlap set to the attestation verifier; and
obtain the optimal data format from the attestation verifier chosen among the data formats of the overlap set.

6. The apparatus according to any one of claims 1 to 5, wherein the generated attestation evidence comprises one or more attestation evidence items corresponding to the one or more local environments of the confidential computing environment.

7. The apparatus according to any one of claims 1 to 6, wherein the confidential computing environment comprises one or more local environments.

8. The apparatus according to claim 7, wherein one or more first sets of data formats each comprises data formats that are available to the attestation environment for generation of respective one or more attestation evidence items of the attestation evidence of the respective one or more local environments of the confidential computing environment.

9. The apparatus according to any one of claims 7 to 8, wherein the processing circuitry is further configured to determine a respective optimal data format for the respective attestation evidence item of the one or more local environments of the confidential computing environment based on the respective first set of data formats and the second set of data formats.

10. The apparatus according to claim 9, wherein the processing circuitry is further configured to generate one or more attestation evidence items of the attestation evidence of one or more local environments of the confidential computing environment in the respective determined optimal data format.

11. The apparatus of claim according to claim 9, wherein the processing circuitry is further configured to select an attestation evidence item of a local environment of the confidential computing environment in the respective determined optimal data format from a plurality of generated attestation evidence items of local environment in a plurality of data formats.

12. The apparatus according to claim 9, wherein the processing circuitry is further configured to obtain one or more attestation evidence items of the one or more local environments of the confidential computing environment; and
wrap one or more attestation evidence items of the one or more local environments in the respective determined optimal data format.

13. The apparatus according to any one of claims 7 to 12, wherein the processing circuitry is further configured to obtain one or more attestation evidence items of the one or more local environments of the confidential computing environment; and
re-format the one or more attestation evidence items of the one or more local environments in the respective determined optimal format.

14. An apparatus for verifying attestation evidence comprising processing circuitry configured to:
obtain a first set of data formats, wherein the first set of data formats comprises data formats of attestation evidence which are verifiable by an attestation verifier;
obtain an overlap set between the first set of data formats and a second set of data formats, the second set of data formats comprises data formats of attestation evidence that are available for generation of attestation evidence by the attestation environment;
determine an optimal data format evidence of a confidential computing environment based on the overlap set.

15. A method comprising:
obtaining a first set of data formats, wherein the first set of data formats comprises data formats that are available to an attestation environment of a confidential computing environment for generation of attestation evidence of a confidential computing environment;
obtaining a second set of data formats, wherein the second set of data formats comprises data formats of attestation evidence that are available to an attestation verifier;
determining an optimal data format for attestation evidence of a confidential computing environment based on the first set of data formats and the second set of data formats;
generating an attestation evidence of the confidential computing environment in the optimal data format.
